# EUROPEAN PATENT APPLICATION

(11) **EP 2 634 770 A1**
(43) Date of publication of application: **04.09.2013**
(21) Application number: 11835764.9
(22) Date of filing: 22.07.2011
(51) Int. Cl.: G11B 7/26, G11B 7/24

(54) **APPARATUS AND METHOD FOR MANUFACTURING OPTICAL RECORDING MEDIUM**

(30) Priority: 25.10.2010 JP 2010238212
(71) Applicant: Panasonic Corporation, Osaka 571-8501 (JP)
(72) Inventor: TAKATORI, Yuuji, Chuo-ku, Osaka-shi, Osaka 540-6207 (JP); TOYOTA, Takehiko, Chuo-ku, Osaka-shi, Osaka 540-6207 (JP); HARADA, Tatsuyuki, Chuo-ku, Osaka-shi, Osaka 540-6207 (JP)
(74) Representative: Eisenführ, Speiser & Partner
(86) International application number: PCT/JP2011/004154
(87) International publication number: WO 2012/056616

(57) **Abstract**

An optical recording medium production device of the invention include: a rotary table on which a substrate of an optical recording medium is placed; and dropping unit for dropping resin for forming a light transmissive film layer during rotation of the rotary table, wherein the dropping unit drops the resin onto an inside of the substrate and a side surface of the substrate. By applying the production device of the invention, in the spin coat method, a UV curable resin layer can be formed a cross-sectional shape of which is uniform in a whole circumference of the optical recording medium side surface.

## Description

### Technical Field

The present disclosure relates to a production device that forms a light transmissive film layer of W (Ultraviolet) curable resin to an optical recording medium such as a Blu-ray disc, and a production method thereof.

### Background Art

In production of an optical recording medium, in a process of forming a light transmissive film layer by UV curable resin to the optical recording medium, a spin coating method (spin coat method) is normally used.
In the spin coating method in the process of forming the light transmissive film layer, a spin table and the optical recording medium placed on the spin table are rotated at a high speed while dropping the UV curable resin to a center vicinity of the optical recording medium. Centrifugal force caused by this high-speed rotation spreads the dropped UV curable resin toward a whole outer circumference of the optical recording medium at a high speed. At this time, the UV curable resin is preferably spread evenly so as to expand a concentric circle.

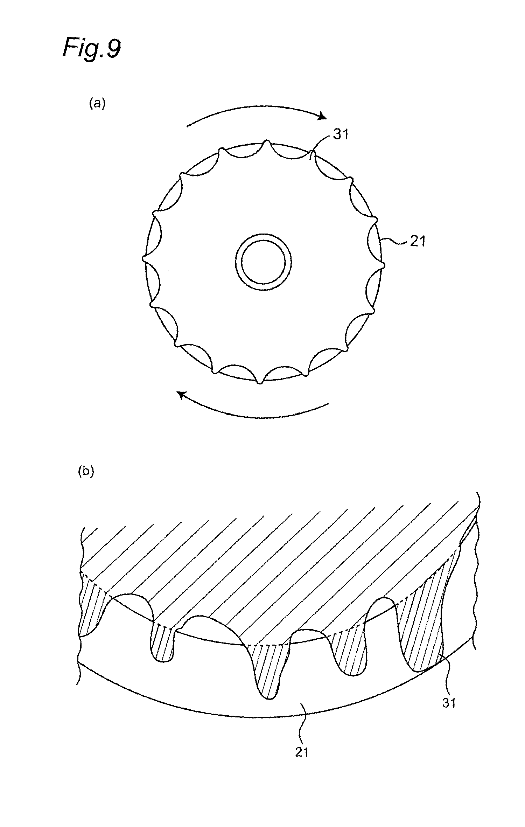

However, in some conditions such as UV curable resin viscosity and substrate temperature, the UV curable resin may not be evenly spread concentrically. Fig. 9(a) is a plan view showing an example in which UV curable resin 31 dropped to the center vicinity of an optical recording medium 21 rotating at a high speed is spread toward the outer circumference by the centrifugal force. As shown in Fig. 9(a), the UV curable resin 31 may be unevenly spread, for example, while causing a number of protruded portions and recessed portions in a radial direction. Consequently, as shown in a partial enlarged view concerning a side surface vicinity of the optical recording medium of Fig. 9(b), the UV curable resin is applied ununiformly on a side surface of the optical recording medium.

Moreover, after the high-speed rotation of the spin table and the optical recording medium, when the spin table stops, the whole of the UV curable resin is drawn back in a central direction by surface tension of the UV curable resin, which often causes a slight bulge of the UV curable resin, particularly in a circumferential edge vicinity of the optical recording medium.

There have been disclosed an optical recording medium production device and a production method thereof in JP 2007-226859 A, in which in order to prevent the occurrence of uneven spread and the occurrence of the bulge in the circumferential edge vicinity, a paddle (end surface application means) is used. The paddle (end surface application means) disclosed in JP 2007-226859 A receives the UV curable resin spreading to a circumferential edge portion of the optical recording medium, and spreads the received UV curable resin to an end surface (a side surface) of the optical recording medium to apply the same to the end surface (end surface) with a uniform thickness.

### Disclosure of Invention

### Problems to be Solved by the Invention

However, as described above, even if after the UV curable resin is spread to the circumferential edge vicinity by the centrifugal force, the spread UV curable resin is applied to the side surface of the optical recording medium with the paddle or the like, it is very difficult for the UV curable resin to have a uniform thickness on the side surface. Here, that the UV curable resin has the uniform thickness on the side surface means that a cross-sectional shape of the UV curable resin layer is uniform in a whole circumference of the optical recording medium side surface.

If the UV curable resin is not applied to the side surface with the uniform thickness, a bulge of the UV curable resin is also caused in the circumferential edge vicinity of an upper surface of the optical recording medium. Moreover, exfoliation of the UV curable resin is easily caused from a border between the side surface of the optical recording medium and the UV curable resin layer. Furthermore, these lead to a deterioration in appearance quality of the optical recording medium.

In light of the above-described problems in the conventional spin coating method, one non-limiting and exemplary embodiment provides an optical recording medium production device and a production method thereof, which enable UV curable resin layer to be applied uniformly in a whole circumference of a side surface of an optical recording medium.

### Means for Solving the Problems

In order to achieve the above object, an optical recording medium production device of the present disclosure includes:
a rotary table on which a substrate of an optical recording medium is placed; and
dropping unit for dropping resin for forming a light transmissive film layer during rotation of the rotary table,
wherein the dropping unit drops the resin onto an inside of the substrate and a side surface of the substrate.

Moreover, an optical recording medium production method of the present disclosure is a method for forming a light transmissive film layer on a substrate of an optical recording medium, the method including:
placing the substrate on a rotary table;
dropping resin for forming the light transmissive film layer onto an inside of the substrate during rotation of the rotary table; and
dropping the resin for forming the light transmissive film layer onto a side surface of the substrate during the rotation of the rotary table.

### Effect of the Invention

In the optical recording medium production device and the production method thereof according to the present disclosure, since the UV curable resin is dropped not only to the inner circumference vicinity of the optical recording medium but also the whole side surface circumference of the optical recording medium, the UV curable resin layer can be uniformly formed in the whole circumference of the side surface of the optical recording medium.

### Brief Description of Drawings

Fig. 1 is a view schematically showing an overall process of production of an optical recording medium.
Fig. 2(a) is a vertical cross-sectional view showing a schematic configuration of a production device to form a light transmissive film layer to the optical recording medium, according to a first embodiment of the present disclosure, Fig. 2(b) is a schematic view of an inside nozzle movement mechanism, and Fig. 2(c) is a schematic view of a side surface nozzle movement mechanism.
Fig. 3 is an enlarged vertical cross-sectional view of circumferential edge portions of a substrate and a rotary table, and an upper end portion of a projected portion when air is blown from an air blow port.
Fig. 4 is a graph chart showing time change of a rotary speed (rpm) of a motor portion (and the rotary table and the substrate) when a spin coat method is performed.
Fig. 5 is a vertical cross-sectional view of a spinning-off curing device for showing a schematic configuration of the spinning-off curing device.
Fig. 6 is a vertical cross-sectional view showing a light-shielding mask and the circumferential edge portion of the substrate when the rotary table and the substrate are rotating.
Fig. 7 is a vertical cross-sectional view showing the circumferential edge portion of the substrate when a bulge portion is spun off in the circumferential edge portion and a side surface of the substrate.
Fig. 8 is a vertical cross-sectional view of a complete curing device for showing a schematic configuration of the complete curing device.
Fig. 9 (a) is a plan view showing an example in which UV curable resin dropped to a center vicinity of an optical recording medium rotating at a high speed is spread toward an outer circumference by centrifugal force, and Fig. 9(b) is a partially-enlarged perspective view of a side surface vicinity of the optical recording medium, showing how the UV curable resin spread toward the outer circumference by the centrifugal force is applied ununiformly on the side surface of the optical recording medium.

### Mode for Carrying out the Invention

Hereinafter, embodiments of the present disclosure will be described with reference to the drawings.

### 1. First Embodiment

### 1.1. Production process of optical recording medium

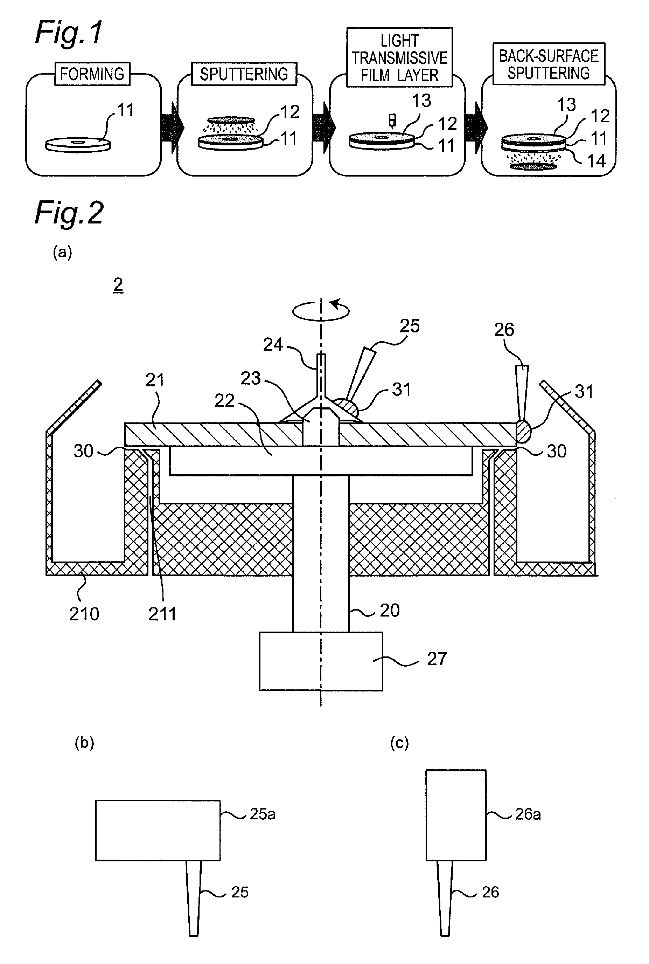

First, an overall process of production of an optical recording medium will be described. Fig. 1 is a view schematically showing the overall process of the production of the optical recording medium. The optical recording medium produced by a production method described below is a disk-shaped recording medium in which an information signal layer is provided on a substrate, and the substrate is irradiated with light to perform recording and/or reproduction of an information signal, and as an example, a Blu-ray disc is taken. As shown in Fig. 1, the overall process of the production of the optical recording medium includes a substrate forming process, a sputtering process, a light transmissive film layer process, and a back-surface sputtering process, and the respective processes are performed in this order.

In the forming process, a substrate 11 having a predetermined uneven pattern is injection-molded with an injection molding machine (not shown) and an injection molding die (not shown). The substrate 11 is made of, for example, polycarbonate resin having a thickness of 1.1 mm, a diameter of 120 mm, and a central hole diameter of 15 mm. The injection-molded substrate 11 is cooled by a cooling mechanism (not shown).

In the sputtering process, a reflection film 12 is formed by a sputtering device (not shown) to the cooled substrate 11. The reflection film 12 is a thin film of 0.1 µm or less made of aluminum, silver or the like. In addition to the reflection film 12, another thin film may be formed to the substrate 11. After the reflection film 12 is formed, the substrate 11 is again cooled by the cooling mechanism (not shown).

In the light transmissive film layer process, a light transmissive film layer 13 is formed by the spin coat on the substrate 11 with the reflection film 12 formed thereon. The light transmissive film layer 13 is, for example, a UV curable resin layer having a thickness of substantially 100 µm. The UV curable resin layer is made up of a cover layer having a thickness of 95 to 98 µm and a hard coat layer having a thickness of 2 to 5 µm. Thus, the light transmissive film layer process is made up of the light transmissive film layer process for forming the cover layer and a light transmissive film layer process for forming the hard coat layer.

Furthermore, the light transmissive film layer process for forming the cover layer is made up of a spin coat process, a spinning-off curing process, and a complete curing process. Among these, the optical recording medium production device according to a first embodiment is a production device to perform the spin coat process.

In the back-surface sputtering process, a moistureproof film 14 is formed on an opposite surface of a front surface of the substrate 11 with the light transmissive film layer 13 formed thereon. The moistureproof film 14 is a film that prevents moisture absorption in order to prevent the substrate 11 from warping due to moisture absorption.

The optical recording medium production device according to the present embodiment is a production device to perform the spin coat process among the spin coat process, the spinning-off curing process, and the complete curing process making up the light transmissive film layer process for forming the cover layer. Particularly, the optical recording medium production device according to the present embodiment is a production device capable of forming the UV curable resin layer uniformly in a whole circumference of a side surface of the optical recording medium.

### 1.2. Configuration of optical recording medium production device

The production device according to the first embodiment of the present disclosure will be described. Fig. 2(a) is a vertical cross-sectional view showing a schematic configuration of the production device to form the light transmissive film layer to the optical recording medium, according to the present embodiment.

An optical recording medium production device 2 according to the present embodiment includes a base portion 210, a motor portion 27, a rotary table 22, a center pin 23, a center cap 24, an inside nozzle 25, and a side surface nozzle 26.

A rotary shaft 20 of the motor portion 27 placed in a central portion of the base portion 210 is joined to a lower surface central portion of the disk-shaped rotary table 22 at an upper end portion thereof. This allows the motor portion 27 to rotate the rotary table 22 at a high speed or at a low speed. In an upper surface central portion of the rotary table 22 is provided the center pin 23 which through a central hole of the substrate 21 restricts a holding position of a reflection film formed substrate 21 (hereinafter, referred to as a substrate 21) held on the rotary table 22. The rotary table 22 holds the substrate 21, for example, by vacuum suction so that the substrate 21 does not move with respect to the rotary table 22.

The rotary table 22 has a disk shape whose diameter is smaller than that of the substrate 21, as shown in Fig. 2(a). When the center pin 23 is fitted into the central hole of the substrate 21 and the rotary table 22 holds the substrate 21 thereon, an outer circumferential portion of the substrate 21 sticks out outward from a side surface of the rotary table 22. Air blow unit 30 from the base portion 210 is provided immediately under the sticking-out portion, as shown in Fig. 2(a). Inside the air blow unit 30, a vent hole 211 is provided, as described later.

The center pin 23 and the central hole vicinity of the substrate 21 are covered with the center cap 24 whose outer diameter is about 18 to 25 mm. A recessed portion provided in a lower surface of the center cap 24 and a protruded portion of a head portion of the center pin 23 are formed so as to be firmly attached to each other. Accordingly, a position of the center cap 24 is also restricted by the center pin 23. The configuration is such that the center cap 24 and the center pin 23 are both permanent magnets, or such that one of them is a permanent magnet and the other is metal. The center cap 24 is thus held on the center pin 23, and in a central hole neighborhood of the substrate 21 so as not to move with respect to the center pin 23 and the substrate 21. The center cap 24 may be configured so as to stick to the center pin 23 and the substrate 21 by vacuum suction force in place of the magnetic force to prevent them from moving with respect to the center cap 24. An upper surface of the center cap 24 has a conical body shape spreading downward.

Particularly, in the present embodiment, the inside nozzle 25 that drops UV curable resin 31 onto an inside of the substrate 21, that is, onto the central hole neighborhood, and the side surface nozzle 26 that drops the UV curable resin 31 onto a side surface of the substrate 21 are provided. The inside nozzle 25 and the side surface nozzle 26 are driven by nozzle movement mechanisms 25a, 26a, as shown in Figs. 2(b), 2(c), respectively. An arrangement position of the inside nozzle 25 is appropriately moved by the inside nozzle movement mechanism 25a so as to enable the UV curable resin 31 to be dropped at a position inside the substrate 21, that is, at a upper position on the upper surface of the center cap 24, that is, on a slope of the conical body.

Moreover, the side surface nozzle 26 drops the UV curable resin 31 onto the side surface of the substrate 21. The UV curable resin dropped from the side surface nozzle 26 is applied to the whole side surface circumference of the substrate 21 by the rotation of the substrate 21. An arrangement position of the side surface nozzle 26 is appropriately moved by the side surface nozzle movement mechanism 26a so as to enable the UV curable resin 31 to be dropped onto the side surface of the substrate 21.

When the side surface nozzle 26 applies the UV curable resin 31 to the whole side surface circumference of the substrate 21, air is blown through the vent hole 211 provided inside the air blow unit 30 in order to prevent the UV curable resin 31 from coming around to a lower surface (i.e., a back surface) of the substrate 21.

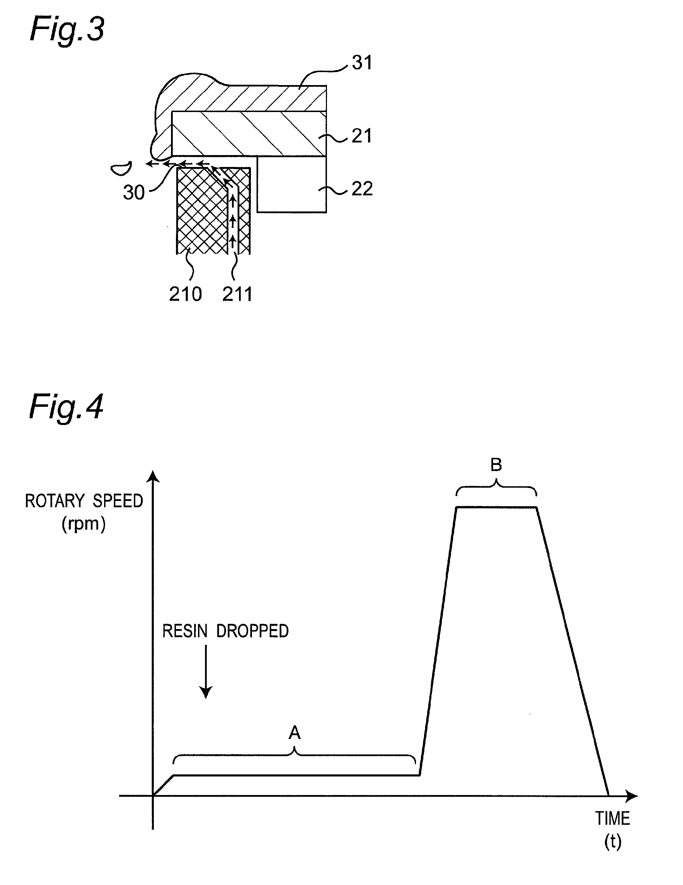

Fig. 3 is an enlarged vertical cross-sectional view of outer circumferential portions of the substrate 21 and the rotary table 22 and an upper end portion of the air blow unit 30 when the air blows from an upper end of an air blow unit 30. The upper end portion of the air blow unit 30 is configured so as to be close to the lower surface of the substrate 21 at a distance of about several millimeters. Furthermore, in the air blow unit 30, the vent hole 211 is provided so that an air flow flowing from a lower central side to an upper outer side of the base portion 210 hits a slightly inner side of a lower end of the side surface of the substrate 21, which makes a horizontal air flow heading for an outside at the lower end of the side surface of the substrate 21.

The UV curable resin applied to the side surface of the substrate 21 and the UV curable resin of the UV curable resin layer formed on the upper surface of the substrate 21 easily come around to the back side of the substrate 21, running down the side surface of the substrate 21. Adhesion of the UV curable resin to the back surface of the substrate 21 will cause an appearance defect. Consequently, by configuring the upper end portion of the air blow unit 30 and the vent hole 211 as shown in Fig. 3, the blow of the air that prevents the UV curable resin 31 from coming around to the lower surface (back surface) of the substrate 21 is effectively performed.

### 1.3. Operation of optical recording medium production device

Operation of the production device 2 according to the present embodiment in the spin coat process will be described.

First, the substrate 21 is transferred onto the rotary table 22 by a substrate conveying mechanism (not shown). When the substrate 21 is transferred onto the rotary table 22, a position of the substrate 21 is restricted by the center pin 23. The rotary table 22 holds the substrate 21 thereon by a substrate holding mechanism, for example, a vacuum suction mechanism (not shown).

The center cap 24 is transferred so as to cover the center pin 23 and the central hole of the substrate 21 by a cap conveying mechanism (not shown). A position of the center cap 24 is also restricted by the center pin 23. The center cap 24 and the center pin 23 are firmly attached to each other, for example, by magnetic force.

When the center cap 24 is arranged on the substrate 21, a forefront of the inside nozzle 25 is moved by the inside nozzle movement mechanism 25a to the predetermined upper position on the upper surface of the center cap 24, that is, on the slope of the conical body. Moreover, a forefront of the side surface nozzle 26 is moved to the side surface neighborhood of the substrate 21 by the side surface nozzle movement mechanism 26a. Immediately after this, by power of the motor portion 27, the rotary table 22 and the substrate 21 start rotating.

The motor portion 27 changes a rotary speed, as schematically shown in Fig. 4. Fig. 4 is a graph chart showing time change of the rotary speed (rpm) of the motor portion 20 (and the rotary table 22 and the substrate 21) when the spin coat method is performed. By the motor portion 27, the rotary table 22 and the substrate 21 perform low-speed rotation of 30 to 150 rpm (rotations/minute) in a section A, and then, in a section B, perform high-speed rotation of 1000 to 4000 rpm (rotations/minute), which is higher-speed rotation than the foregoing.

During the low-speed rotation in the section A of Fig. 4, the UV curable resin 31 from the inside nozzle 25 is dropped onto the upper surface of the center cap 24, that is, onto the slope of the conical body. Since the center cap 24 and the substrate 21 rotate, although the speed is low, the UV curable resin 31 dropped from the inside nozzle 25 is applied to a whole circumference of the upper surface of the center cap 24, that is, of the slope of the conical body and a whole circumference of an inner circumference vicinity of the substrate 21.

Furthermore, in this section A, the UV curable resin 31 is also dropped from the side surface nozzle 26 to be applied to the whole side surface circumference of the substrate 21. At this time, in order to prevent the UV curable resin 31 applied to the whole side surface circumference of the substrate 21 from coming around to the back surface of the substrate 21, as indicated by arrows in Fig. 3, the horizontal air flow is blown through the vent hole 211 from the lower side of the air blow unit 30 toward the lower end of the side surface of the substrate 21.

Subsequently, during the high-speed rotation in the section B of Fig. 4, the UV curable resin 31 dropped onto the upper surface of the center cap 24, that is, onto the slope of the conical body is flatted toward the outer circumference of the upper surface of the substrate 21 by the centrifugal force. The rotary speed at this time depends on UV curable resin viscosity, substrate temperature and the like, and the rotary speed is decided so as to form the UV curable resin layer having as uniform thickness as possible by the flatting of the UV curable resin.

Furthermore, in this section B, superfluous portions of the UV curable resin 31 applied to the whole circumference of the side surface of the substrate 21 from the side surface nozzle 26 is spun off by the centrifugal force of the high-speed rotation. The above-described spinning-off allows the UV curable resin layer to be uniformly formed in the whole circumference of the side surface of the substrate 21. At this time as well, in order to prevent the UV curable resin 31 applied to the whole circumference of the side surface of the substrate 21 from coming around to the back surface of the substrate 21, the horizontal air flow is blown through the vent hole 211 from the lower side of the air blow unit 30 toward the lower end of the side surface of the substrate 21 (refer to Fig. 3).

By the rotation of the rotary table 22, the substrate 21 and the center cap 24 by the motor portion 42, the uniform UV curable resin layer is formed on the upper surface and the side surface of the substrate 21, and then, the center cap 24 is removed by the cap conveying mechanism (not shown).

As described above, the UV curable rein layer 31 is formed on the upper surface of the substrate 21, when the operation of performing the spin coat process of the production device 2 according to the present embodiment is completed.

### 1.4. Spinning-off curing process and complete curing process

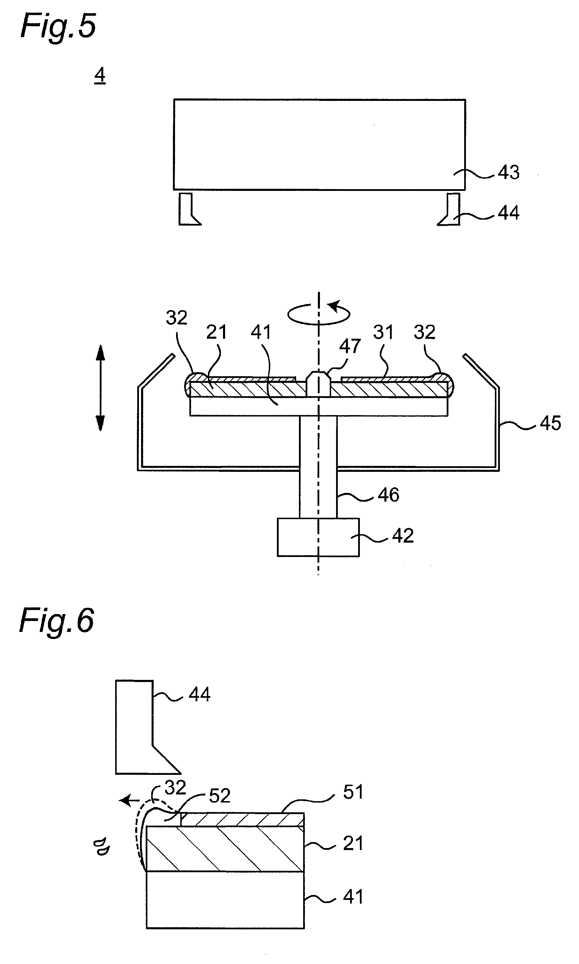

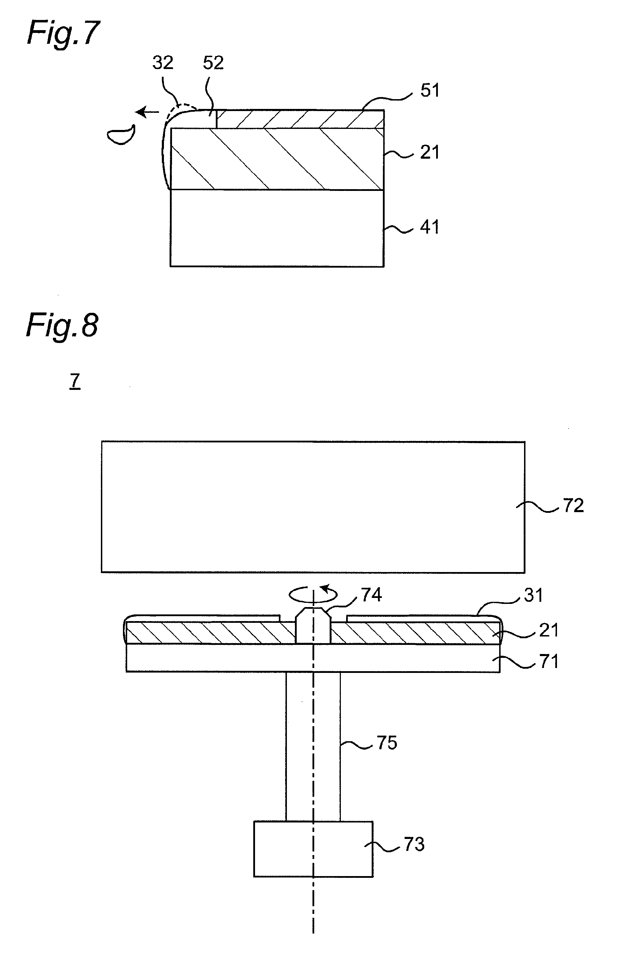

After the spin coat process is performed by the production device 2 according to the first embodiment, the spinning-off curing process and the complete curing process are performed. The spinning-off curing process is performed by a spinning-off curing device 4 shown in Fig. 5, and the complete curing process is performed by a complete curing device 7 shown in Fig. 8.

In the substrate such as a Blu-ray disc, a flatness of the light transmissive film layer including the UV curable resin layer largely affects writing quality and playback quality. However, in the substrate (Blu-ray disc) to which only the spin coat process is applied, a bulge of the UV curable resin easily occurs in the circumferential edge portion of the substrate outer circumference by surface tension of the UV curable resin. In order to remove this bulge portion, the spinning-off curing process is performed by the spinning-off curing device 4. Furthermore, in order to completely cure the UV curable resin layer, the complete curing process is performed by the complete curing device 7.

In the spinning-off curing process and the complete curing process, in order to first perform the spinning-off curing process, after the spin coat process to the substrate 21 in the production device 2 according to the first embodiment shown in Fig. 2(a) has been completed, the substrate 21 is transferred to the spinning-off curing device 4 shown in Fig. 5 by the conveying mechanism (not shown). As described later, the substrate 21 is held on a rotary table 41 of the spinning-off curing device 4.

### 1.4.1 Configuration of spinning-off curing device

Fig. 5 is a vertical cross-sectional view of the spinning-off curing device 4 for showing a schematic configuration of the spinning-off curing device 4. The spinning-off curing device 4 shown in Fig. 5 includes a covering portion 45, a motor portion 42, the rotary table 41, a center pin 47, a first UV irradiating portion 43, and a light-shielding mask 44.

The covering portion 45 has a substantially cylindrical shape with an upper end thereof open, and inside the covering portion 45, the rotary table 41 and a part of a rotary shaft of the motor portion 42 are arranged. A rotary shaft 46 of the motor portion 42 placed in a central portion of the covering portion 45 is joined to a lower surface central portion of the disk-shaped rotary table 41 at an upper end portion thereof. This allows the motor portion 42 to rotate the rotary table 41. In an upper surface central portion of the rotary table 41 is provided with the center pin 47 which through the central hole of the substrate 21 restricts a holding position of the substrate 21 held on the rotary table 41. The rotary table 41 holds the substrate 21, for example, by vacuum suction so that the substrate 21 does not move with respect to the rotary table 41.

Vertically above the rotary table 41, the first UV irradiating portion 43 and the light-shielding mask 44 are provided. The first UV irradiating portion 43 irradiates ultraviolet rays from a lower surface thereof. The lower surface to irradiate the ultraviolet rays has a disk shape having substantially the same outer diameter as, or a little larger outer diameter than that of the substrate 21. The light-shielding mask 44 is a member that shields a part of the ultraviolet rays irradiated from the lower surface of the first UV irradiating portion 43, and has a ring shape. This ring shape is a shape that covers and hides the circumferential edge portion of the outer circumference of the substrate 21, as described later, and an inner diameter thereof is 118 mm to 119 mm.

### 1.4.2 Operation of spinning-off curing device

Next, operation in the spinning-off curing process of the spinning-off curing device 4 will be described.

The covering portion 45, the motor portion 42, the rotary table 41, and the substrate 21 held on the rotary table 41 are moved immediately under the light-shielding mask 44 by a lifting and lowering device (not shown). At this time, the movement is performed so that a gap between the substrate 21 and the light-shielding mask 44 becomes 0. 5 mm to 1.5 mm.

Next, the rotary table 41 and the substrate 21 are rotated by the motor portion 42. Fig. 6 is a vertical cross-sectional view showing the light-shielding mask 44 and the circumferential edge portion of the outer circumference of the substrate 21 when the rotary table 41 and the substrate 21 are rotating. In the UV curable resin layer, a portion receiving the ultraviolet rays is a semi-cured state portion 51. On the other hand, the light-shielding mask 44 performs the shielding of the ultraviolet rays to the circumferential edge portion of the substrate 21 in the UV curable resin layer, particularly to a portion where a bulge 32 of the UV curable resin has occurred. Accordingly, the circumferential edge portion of the substrate 21 in the UV curable resin layer becomes an uncured state portion 52. The bulge 32 portion of the UV curable resin layer in this uncured state portion 52 is flatted outward by the centrifugal force of the rotation, and is gradually removed from the UV curable resin layer (i.e., spun off). Continuing the rotation allows the uniform UV curable resin layer without any bulge portion to be formed in the whole circumferences in the circumferential edge portion and the side surface of the substrate 21, as shown in Fig. 7. Fig. 7 is a vertical cross-sectional view showing the circumferential edge portion of the substrate 21 when the bulge portion is spun off in the circumferential edge portion and the side surface of the substrate 21. At this time point, the spinning-off curing process has been completed.

After the spinning-off curing process has been completed, the substrate 21 is transferred to the complete curing device 7 shown in Fig. 8 by the conveying mechanism (not shown) . As described later, the substrate 21 is held on a base 71 of the complete curing device 7.

### 1.4.3. Configuration of complete curing device

Fig. 8 is a vertical cross-sectional view of the complete curing device 7 for showing a schematic configuration of the complete curing device 7. The complete curing device 7 shown in Fig. 8 includes a motor portion 73, the base 71, a center pin 74, and a second UV irradiating portion 72.

A rotary shaft 75 of the motor portion 73 placed in a central portion of the complete curing device 7 is joined to a lower surface central portion of the base 71 at an upper end portion thereof. This allows the motor portion 73 to rotate the base 71. In an upper surface central portion of the base 71 is provided the center pin 74 which through the central hole of the substrate 21 restricts a holding position of the substrate 21 held on the base 71.

Vertically above the base 71, the second UV irradiating portion 72 is provided. The second UV irradiating portion 72 also irradiates ultraviolet rays from a lower surface thereof. The lower surface to irradiate the ultraviolet rays has a disk shape having substantially the same outer diameter as, or a little larger outer diameter than that of the substrate 21.

### 1.4.4. Operation of complete curing device

Next, operation of performing the complete curing process by the complete curing device 7 will be described.

The UV curable resin layer 31 of the substrate 21 includes the semi-cured state portion 51 and the uncured state portion 52 immediately after transferring the substrate 21 to the complete curing device 7. After transferring the substrate 21 to the complete curing device 7, the UV curable resin layer 31 of the substrate 21 held on the base 71 is completely cured by the ultraviolet ray irradiation from the lower surface of the second UV irradiating portion 72. At this time, in order to even out in-plane distribution of an irradiated ultraviolet light amount on the upper surface of the substrate 21, the base 71 and the substrate 21 are rotated by the motor portion 73. With the complete curing of the UV curable resin layer, the complete curing process has been completed.

In the complete curing device 7 shown in Fig. 8, a reflection board for ultraviolet ray reflection may be provided in an outer neighborhood of the base 71. While the UV curable resin layer 31 on the upper surface of the substrate 21 is irradiated with the ultraviolet rays by the second UV irradiating portion 72, the ultraviolet rays irradiated by the second UV irradiating portion 72 may be appropriately reflected at the reflection board to irradiate the UV curable resin layer 31, particularly on the side surface of the substrate 21. This enables the whole UV curable resin layer 31 formed on the substrate 21 to be cured efficiently and quickly.

### 1.5. Subsequent process

As described above, the spin coat process, the spinning-off curing process, and the complete curing process are completed, by which the transmissive film layer process for forming the cover layer is completed. Furthermore, thereafter, the light transmissive film layer process for forming the hard coat layer is completed, by which the light transmissive film layer shown in Fig. 1 is completed. After the light transmissive film process, the back-surface sputtering process is performed.

### 1.6. Conclusion of the present embodiment

As described above, in the spin coat process the optical recording medium production device 2 according to the present embodiment drops the UV curable resin onto the whole side surface circumference of the substrate 21 in addition to the drop of the UV curable resin in the central hole vicinity of the optical recording medium, that is, at the upper position on the upper surface of the center cap 24, that is, on the slope of the conical body. Dropping the UV curable resin onto the side surface of the substrate in this manner enables the UV curable resin layer to be uniformly formed in the whole circumference of the side surface of the substrate 21.

Furthermore, the spinning-off curing process and the complete curing process are performed to the substrate 21 produced by the optical recording medium production device 2 according to the present embodiment, which can bring about the optical recording medium such as a Blu-ray disc without any bulge in the substrate circumferential edge portion, and in which exfoliation of the UV curable resin from the side surface portion of the substrate does not occur.

### 2. Other Embodiments

The optical recording medium production device according to the present disclosure is not limited to the above-described production device 2 according to the first embodiment. While in the optical recording medium production device 2 according to the first embodiment, the two nozzles (the inside nozzle 25, the side surface nozzle 26) to drop the UV curable resin are provided, the number of the provided nozzles may be one.

In the case where the number of the provided nozzles is one, the nozzle is first arranged at the upper position on the upper surface of the center cap 24, that is, on the slope of the conical body by a movement mechanism (not shown). During the low-speed rotation in the section A shown in Fig. 4, the nozzle drops the UV curable resin onto the upper surface of the center cap 24, that is, onto the slope of the conical body, and immediately after this, the nozzle is further moved to the side surface vicinity of the substrate 21 by the movement mechanism (not shown) to drop the UV curable resin onto the whole side surface circumference of the substrate 21. Thereafter, when the high-speed rotation in the section B shown in Fig. 4 is performed, as in the production device according to the first embodiment, a UV curable resin layer having a uniform thickness is formed on the upper surface of the substrate 21, and a UV curable resin layer having a uniform cross-sectional shape is formed in the whole circumference of the side surface of the substrate 21.

In the case where the number of the provided nozzles is one, a configuration may be employed in which the nozzle is first arranged in the side surface vicinity of the substrate 21 by the movement mechanism to drop the UV curable resin onto the whole side surface circumference of the substrate 21, and immediately after this, is moved to the upper position on the upper surface of the center cap 24, that is, on the slope of the conical body by the movement mechanism to drop the UV curable resin onto the upper surface of the center cap 24, that is, onto the slope of the conical body. When the number of the provided nozzles is one in this manner, the configuration of the optical recording medium production device can be simplified.

In an optical recording medium production device according to another embodiment of the present disclosure, a plurality of side surface nozzles may be provided. In the production device according to this embodiment, for example, the two side surface nozzles are arranged by the movement mechanism at symmetrical positions above the side surface with the substrate interposed to perform the dropping of the UV curable resin. In this manner, the provision of the plurality of side surface nozzles enables the UV curable resin layer on the side surface to be formed more quickly. Moreover, a plurality of inside nozzles may be provided.

In the above-described embodiment, the light transmissive film layer is formed, using the UV curable resin dropped by the nozzles as dropping unit. However, even when the resin making the light transmissive film layer is resin other than the UV curable resin, the idea of the present disclosure can be applied.

### Industrial Applicability

The present disclosure is useful in a production device and a production method in which a light transmissive film layer made of UV curable resin is uniformly formed to an optical recording medium such as a Blu-ray disc.

### Explanation of References

- 11: substrate
- 12: reflection film
- 13: light transmissive film layer
- 21: substrate
- 22: rotary table
- 23: center pin
- 24: center cap
- 25: inside nozzle
- 26: side surface nozzle
- 27: motor portion
- 30: air blow unit
- 31: UV curable resin layer
- 32: bulge of UV curable resin
- 41: rotary table
- 42: motor portion
- 43: first UV irradiating portion
- 44: light-shielding mask
- 45: covering portion
- 47: center pin
- 51: semi-cured state portion
- 52: uncured state portion
- 71: base
- 72: second UV irradiating portion
- 73: motor portion
- 74: center pin
- 210: base portion
- 211: vent hole

## Claims

1. An optical recording medium production device comprising:
a rotary table on which a substrate of an optical recording medium is placed; and
dropping unit for dropping resin for forming a light transmissive film layer during rotation of the rotary table,
wherein the dropping unit drops the resin onto an inside of the substrate and a side surface of the substrate.

2. The optical recording medium production device according to claim 1,
wherein the rotary table rotates at a first rotary speed, and rotates at a second rotary speed higher than the first rotary speed after rotating at the first rotary speed, and
the dropping unit drops the resin during the rotation at the first rotary speed.

3. The optical recording medium production device according to claim 1,
wherein the dropping unit includes an inside nozzle and a side surface nozzle, and
the inside nozzle is arranged on an inner side of the substrate, and the side surface nozzle is arranged at the side surface of the substrate.

4. The optical recording medium production device according to claim 1,
wherein the rotary table has a disk shape whose outer diameter is smaller than that of the substrate, and
air blow unit for performing air blow is provided at a position immediately under a substrate portion sticking out from an outer circumferential side surface of the rotary table when the substrate is placed on the rotary table.

5. An optical recording medium production method for forming a light transmissive film layer on a substrate of an optical recording medium, the method comprising:
placing the substrate on a rotary table;
dropping resin for forming the light transmissive film layer onto an inside of the substrate during rotation of the rotary table; and
dropping the resin for forming the light transmissive film layer onto a side surface of the substrate during the rotation of the rotary table.

6. The optical recording medium production method according to claim 5, further comprising
rotating the rotary table at a first rotary speed, and rotating the rotary table at a second rotary speed higher than the first rotary speed after the rotation at the first rotary speed,
wherein in the dropping step, the resin is dropped during rotation at the first rotary speed.

7. The optical recording medium production method according to claim 5, further comprising
blowing air from a lower side of an outer circumferential portion of the substrate when the resin is dropped, or immediately after this.

8. The optical recording medium production method according to claim 6, further comprising,
after the resin is applied to the substrate, irradiating an applied resin layer with ultraviolet rays while shielding a circumferential edge portion of the substrate from the ultraviolet rays, and simultaneously rotating the substrate.
